# EUROPÄISCHE PATENTANMELDUNG

(11) **EP 4 659 634 A1**
(43) Veröffentlichungstag der Anmeldung: **10.12.2025**
(21) Anmeldenummer: 25179471.5
(22) Anmeldetag: 28.05.2025
(51) Int. Cl.: A47J 31/08

(54) **FILTERPAPIEREINSATZ UND VERFAHREN ZUR HERSTELLUNG EINES FILTERPAPIEREINSATZES**

(30) Priorität: 07.06.2024 DE 102024115989
(71) Anmelder: Melitta Europa GmbH & Co. KG, 32427 Minden (DE)
(72) Erfinder: LANGENHORST, Rebecca, 32425 Minden (DE); FRANZKE, Alexander, 32425 Minden (DE); KÜSTER, Nils, 32469 Petershagen (DE); PERTSCH, Eduard, 32469 Petershagen (DE)
(74) Vertreter: Dantz, Jan Henning

(57) **Zusammenfassung**

Ein Filterpapiereinsatz (1) zur Herstellung von Brühgetränken, mit zwei Lagen (2a, 2b) aus Filterpapier, die an einem Boden (3) und an zwei gegenüberliegenden Seiten (4, 5) zur Ausbildung eines befüllbaren Innenraumes miteinander verbunden sind, wobei die Lagen (2a, 2b) aus Filterpapier an einer zu dem Boden (3) gegenüberliegenden Öffnungsseite (6) von einer aufeinander liegenden Position in eine beabstandete Befüllposition bewegbar sind, und in den beiden Lagen (2a, 2b) aus Filterpapier eine Vielzahl von Schlitzen (9a, 9b) vorgesehen sind, ist so ausgebildet, dass die kleinste Öffnungsweite (B, b) der Schlitze (9a, 9b) senkrecht zu ihrer Längsrichtung in den beiden Lagen (2a, 2b) aus Filterpapier unterschiedlich ist. Dadurch wird das Extraktionsergebnis des Brühgetränkes verbessert. Zudem wird ein Verfahren zur Herstellung eines Filterpapiereinsatzes (1) bereitgestellt.

## Beschreibung

Die vorliegende Erfindung betrifft einen Filterpapiereinsatz zur Herstellung von Brühgetränken, mit zwei Lagen aus Filterpapier, die an einem Boden und an zwei gegenüberliegenden Seiten zur Ausbildung eines befüllbaren Innenraumes miteinander verbunden sind, wobei die Lagen aus Filterpapier an einer zu dem Boden gegenüberliegenden Öffnungsseite von einer aufeinander liegenden Position in eine beabstandete Befüllposition bewegbar sind, und in den beiden Lagen aus Filterpapier eine Vielzahl von Schlitzen vorgesehen sind.

In der DE 195 16 800 A1 ist ein Filterpapiereinsatz zur Herstellung von Aromaauszügen aus Kaffee oder Tee offenbart, bei dem in einer Filterfläche des Filterpapiereinsatzes eine Vielzahl von Schlitzen eingebracht sind. Die Schlitze sind durch Einschnitte gebildet und sollen abhängig vom hydrostatischen Druck innerhalb des Filtergefäßes mehr oder weniger weit geöffnet werden. Häufig kommt es allerdings zu Verstopfungen der Schlitze, da die Schnittkanten unmittelbar aneinander anliegen und sich verhaken können.

In einer Weiterentwicklung offenbart die EP 2 793 662 B1 einen Filterpapiereinsatz, bei dem in den Lagen aus Filterpapier eine Vielzahl von Schlitzen zur Erhöhung der Durchlässigkeit eingebracht sind. Dabei ist jeder Schlitz an einem Bodenabschnitt einer im Wesentlichen topfförmigen Prägung angeordnet und die Schlitze sind S-förmig ausgebildet. Die Prägung in dem Filterpapier führt zu einer gewissen Versteifung des Filtermaterials und auch hier kann es dazu kommen, dass die Schlitze beim Brühvorgang geschlossen bleiben oder verstopfen. Dadurch wird die Durchlässigkeit gegenüber Kaffeeöl reduziert.

Ein Verfahren zur Herstellung eines Filterbeutels aus wasserdurchlässigem Filtermaterial ist aus der DE 34 46 403 A1 bekannt.

Es ist daher Aufgabe der vorliegenden Erfindung, einen Filterpapiereinsatz und ein Verfahren zur Herstellung eines Filterpapiereinsatzes zu schaffen, die durch eine optimierte Durchlässigkeit ein verbessertes Brühergebnis ermöglichen und zudem eine effektive Herstellung gewährleistet wird.

Diese Aufgabe wird mit einem Filterpapiereinsatz mit den Merkmalen des Anspruchs 1 und einem Verfahren zur Herstellung eines Filterpapiereinsatzes mit den Merkmalen des Anspruchs 8 gelöst.

Der erfindungsgemäße Filterpapiereinsatz zur Herstellung von Brühgetränken, insbesondere Kaffee, umfasst zwei Lagen aus Filterpapier, die an einem Boden und an zwei gegenüberliegenden Seiten zur Ausbildung eines befüllbaren Innenraumes miteinander verbunden sind, wobei die beiden Lagen aus Filterpapier an einer zu dem Boden gegenüberliegenden Öffnungsseite von einer aufeinander liegenden Position in eine beabstandete Befüllposition bewegbar sind, in der der Filterpapiereinsatz im Wesentlichen trichterförmig oder kegelstumpfförmig ausgebildet ist. In den beiden Lagen aus Filterpapier sind zudem eine Vielzahl von Schlitzen vorgesehen. Dabei ist die kleinste Öffnungsweite der Schlitze senkrecht zu ihrer Längsrichtung in den beiden Lagen aus Filterpapier unterschiedlich. Durch die Schlitze mit unterschiedlicher Öffnungsweite sind in dem Filterpapier Bereiche gebildet, die bei der Extraktion durchlässiger ausgebildet sind, insbesondere für Kaffeeöl, was das Brühergebnis im Hinblick auf den Gehalt an Kaffeeöl in dem Brühgetränk verbessert.

Die kleinste Öffnungsweite der Schlitze wird dabei durch den Abstand der beiden Schnittkanten senkrecht zur Längsrichtung der Schlitze bestimmt, wobei die kleinste Öffnungsweite der geringste Abstand an dem Schlitz ist, der über die Dicke des Filterpapiers gesehen eine unterschiedliche Öffnungsweite haben kann. Dann wird die kleinste Öffnungsweite herangezogen, wenn der Schlitz über die Höhe des Schlitzes eine unterschiedliche Öffnungsweite aufweist. Als kleinste Öffnungsweite kann auch eine gemittelte kleinste Öffnungsweite verwendet werden, wenn die Schnittkante nicht eben ausgebildet ist.

Vorzugsweise ist die kleinste Öffnungsweite in einer ersten Lage des Filterpapiers mindestens 10 % breiter als die kleinste Öffnungsweite in einer zweiten Lage des Filterpapiers. Dadurch unterscheiden sich die Öffnungsweiten in den beiden Lagen aus Filterpapier ausreichend, um einen Effekt beim Brühvorgang feststellen zu können.

In einer weiteren Ausgestaltung sind die Schlitze senkrecht zu ihrer Längsrichtung im Querschnitt in beiden Lagen keilförmig ausgebildet. Über die Höhe der Schlitze gibt es somit eine Seite mit größerer Öffnungsweite und eine gegenüberliegende Seite mit kleinerer Öffnungsweite, so dass über die Höhe der Schlitze eine Keilform ausgebildet ist. Diese Keilform kann sich durchgängig durch die beiden Lagen erstrecken, so dass es in den beiden Lagen im Wesentlichen deckungsgleiche Schlitze gibt, die sich nur im Hinblick auf die Öffnungsweite unterscheiden. Die Schlitze weisen vorzugsweise die gleiche Länge auf, beispielsweise kann die Länge der Schlitze zwischen 1 mm und 5 mm, insbesondere zwischen 2 mm bis 4 mm betragen. Die Schlitze können dabei in den beiden Lagen durch das gleiche Schneidwerkzeug hergestellt sein, beispielsweise mit einer keilförmigen Schneidkante, die beim Eintreiben in das Filterpapier beide Lagen durchdringt und durch die Keilform Schlitze mit unterschiedlicher Öffnungsweite herstellt.

Vorzugsweise sind die Schlitze in Längsrichtung gerade ausgebildet. Optional können die Schlitze auch V-förmig oder bogenförmig ausgebildet sein, wobei auch bei diesen Geometrien einer Schneidkante diese bevorzugt im Querschnitt keilförmig ausgebildet ist.

Durch die in Fließrichtung des Kaffees keilförmige Öffnung der Schlitze kann beim Brühen eine optimierte Strömung aus dem Filterpapiereinsatz erhalten werden. Dabei ist zumindest in einer Lage die keilförmige Öffnung in Fließrichtung aufspreizend ausgebildet, so dass ein Verstopfen dieser Öffnungen unwahrscheinlich ist. Zumindest in einer Lage ist wenigstens ein Teil der keilförmigen Schlitze in Fließrichtung aufspreizend ausgebildet. Optional können aller Schlitze in einer Lage nach außen in Fließrichtung keilförmig aufspreizend ausgebildet sein. Ferner können optional in beiden lagen Schlitze vorgesehen sein, die nach außen in Fließrichtung aufspreizen.

Bei dem erfindungsgemäßen Verfahren zur Herstellung eines Filterpapiereinsatzes wird zunächst eine Bahn aus Filterpapier bereitgestellt, die dann gefaltet wird, so dass zwei bahnförmige Lagen aus Filterpapier aufeinander angeordnet sind. In diese zwei bahnförmigen Lagen werden dann Schlitze eingeschnitten und es erfolgt ein Prägen und Ausschneiden eines Filterpapiereinsatzes aus den aufeinander liegenden Lagen aus Filterpapier. Die Reihenfolge der einzelnen Verfahrensschritte ist dabei beliebig, das Prägen, Ausschneiden und Schneiden der Schlitze kann nacheinander oder gleichzeitig erfolgen. Durch das Schneiden der Schlitze in die aufeinander liegenden Lagen erfolgt der Herstellungsprozess besonders effektiv, weil keine zwei Schneidvorgänge erfolgen müssen, wenn das Einbringen der Schlitze in der noch ungefalteten Position erfolgt. Das Schneiden der Schlitze erfolgt somit durch zwei Lagen aus Filterpapier, was auch den Verschleiß der Schneidwerkzeuge verringert und zudem Schlitze mit unterschiedlicher Öffnungsweite herstellt.

Vorzugsweise ist eine beim Falten erzeugte Faltkante der Bahn aus Filterpapier nach der Konfektionierung des Filterpapiereinsatzes eine Faltkante an einer Seite zur Verbindung der beiden Lagen des Filterpapiereinsatzes.

Das Schneiden von Schlitzen und das Ausschneiden des Filterpapiereinsatzes erfolgt vorzugsweise gleichzeitig, wobei für das Schneiden der Schlitze und das Ausschneiden eine Schneidwalze mit mehreren Schneidkanten eingesetzt wird. Dies ermöglicht eine effektive Herstellung, da sowohl die Schneidkanten an einer äußeren Seite des Filterpapiereinsatzes als auch die Filterpapiereinsatzes zum Einbringen der Schlitze gleichzeitig, also durch eine einzige Schneidwalze erfolgen. Dies vermeidet auch Fehler durch einen möglichen Versatz, wenn zwei hintereinander liegende Schneidwerkzeuge eingesetzt werden. Eine Schneidkante zum Schneiden der Schlitze ist im Querschnitt vorzugsweise keilförmig ausgebildet, so dass mit einfachen Mitteln Schlitze in das Filterpapier eingebracht werden, die ebenfalls keilförmig ausgestaltet sind und somit in beiden Lagen eine unterschiedliche Öffnungsweite der Schlitze erzeugen.

Die Erfindung wird nachfolgend anhand eines Ausführungsbeispiels mit Bezug auf die beigefügten Zeichnungen näher erläutert. Es zeigen:
- Figuren 1A und 1B: zwei Ansichten eines erfindungsgemäßen Filterpapiereinsatzes, und
- Figur 2: eine schematische Ansicht eines Verfahrens zur Herstellung eines Filterpapiereinsatzes.

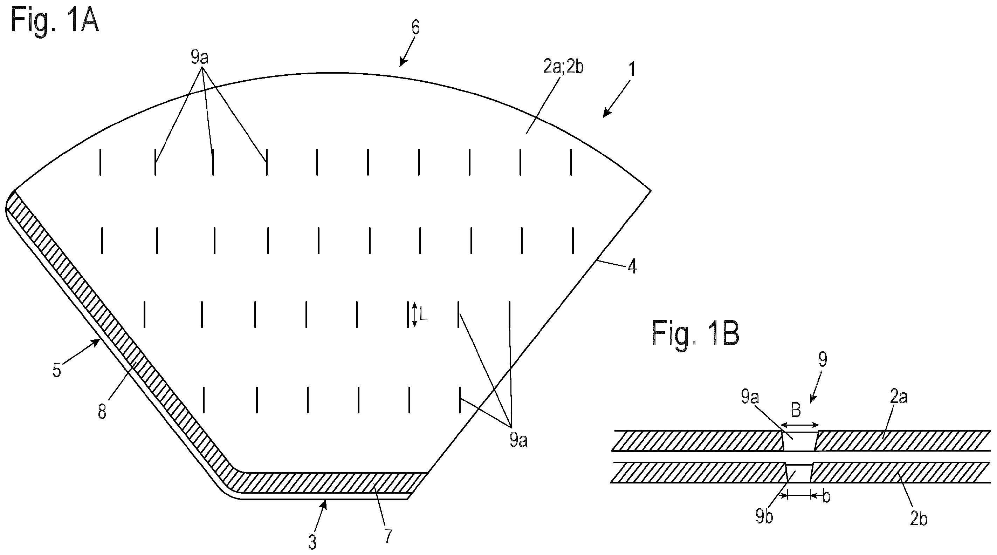

Ein Filterpapiereinsatz 1 umfasst zwei Lagen 2a und 2b aus Filterpapier, die deckungsgleich aufeinander angeordnet sind. Die beiden Lagen 2a und 2b sind an einem Boden 3 und zwei Seiten 4 und 5 miteinander verbunden, wahlweise über eine Faltkante oder eine Naht, insbesondere eine Prägenaht. In Figur 1a ist die Seite 4 durch eine Faltkante gebildet, an der die beiden Lagen 2a und 2b miteinander verbunden sind. Der Boden 3 ist durch eine Prägenaht 7 gebildet, die über einen Bogen mit einer Prägenaht 8 an der Seite 5 verbunden ist. Benachbart zu den Prägenähten 7 und 8 ist das Filterpapier ausgeschnitten.

An einer zu dem Boden 3 gegenüberliegenden Öffnungsseite 6 sind die beiden Lagen 2a und 2b von einer an einer aufeinander liegenden Position in eine beabstandete Befüllposition bewegbar. In der Befüllposition besitzt der Filterpapiereinsatz eine im Wesentlichen kegelstumpfförmige Form. Die Geometrie der beiden Lagen 2a und 2b aus Filterpapier kann auch anders ausgebildet sein und die Verbindung an dem Boden 3 und den Seiten 5 über Prägenähte 7 und 8 kann ebenfalls modifiziert werden, beispielsweise können parallele Prägenähte als Doppelnaht zur Verbindung der Lagen 2a und 2b eingesetzt werden. Bei einer Doppelnaht sind zwei Prägenähte parallel zueinander ausgerichtet und besitzen meist einen schmalen unverprägten Bereich zwischen sich.

In den beiden Lagen 2a und 2b aus Filterpapier sind eine Vielzahl von Schlitzen 9a und 9b eingebracht, die linienförmig ausgebildet sind und eine Länge L zwischen 1 mm und 5 mm, insbesondere 2 mm bis 4 mm besitzen. Die Ausrichtung der Schlitze 9a, 9b ist dabei vom Boden 3 zur Öffnungsseite 6 hin, kann aber auch parallel zu einer der beiden Seiten 4 oder 5 oder unterschiedlich ausgebildet sein, beispielsweise senkrecht zu dem bogenförmigen Verlauf an der Öffnungsseite 6.

Wie in Figur 1b erkennbar ist, erstrecken sich die Schlitze 9a, 9b durch beide Lagen 2a und 2b aus Filterpapier, so dass in der ersten Lage 2a ein erster Schlitz 9a und der in der zweiten Lage 2b ein zweiter Schlitz 9b ausgebildet ist. Die Schlitze 9a und 9b sind dabei mit gleicher Länge L ausgebildet, aber besitzen eine unterschiedliche Öffnungsweite. Eine Öffnungsweite B des ersten Schlitzes 9a ist dabei größer ausgebildet als eine Öffnungsweite b eines Schlitzes 9b in der zweiten Lage 2b. Die Öffnungsweite entspricht dabei der Breite des jeweiligen Schlitzes 9a oder 9b senkrecht zur Längsrichtung an der kleinsten Stelle. Eine Schnittkante der Schlitze 9a und 9b ist dabei nicht senkrecht zur Ebene der Lagen 2a und 2b ausgerichtet, sondern leicht keilförmig, so dass die Schlitze 9a in der ersten Lage 2a eine etwas größere Öffnungsweite besitzen, vorzugsweise um mindestens 10 % größere Öffnungsweite als die Schlitze 9b in der zweiten Lage 2b.

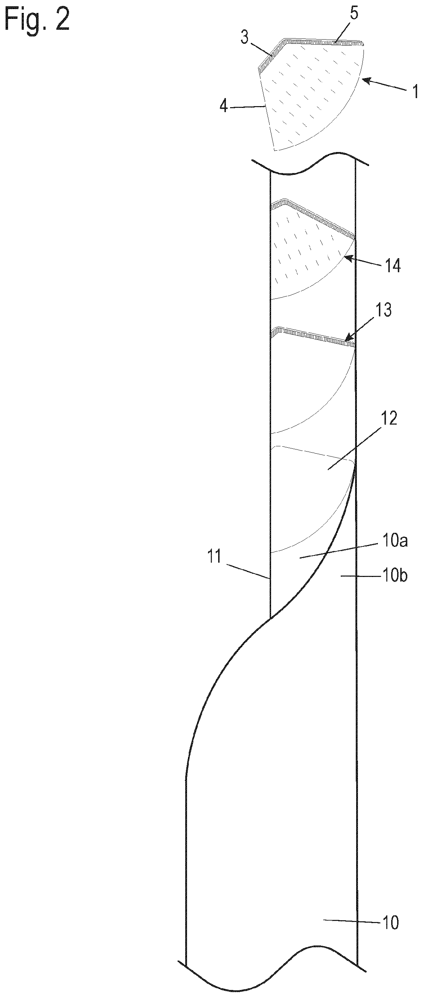

Ein Verfahren zur Herstellung eines Filterpapiereinsatzes 1 wird mit Bezug auf die Figur 2 erläutert. Zunächst wird eine Bahn 10 aus Filterpapier zugeführt und an einer Faltstation gefaltet, wobei eine Faltkante 11 sich parallel zur Längsrichtung der Bahn 10 erstreckt, so dass zwei Lagen 10a und 10b aus dem bahnförmigen Filterpapier aufeinander liegend angeordnet sind. Diese beiden Lagen 10a und 10b werden dann zu einer Schneid- und Prägestation geführt.

An einer Schneidstation wird die äußere Kontur eines Filterpapiereinsatzes 1 ausgeschnitten, so dass ein Rohling 12 hergestellt wird. Zudem wird an einer Prägestation eine Verbindung zwischen den aufeinander liegenden Lagen 10a und 10b hergestellt, so dass ein Rohling 13 schon zwei verbundene Lagen aufweist.

Ein weiterer Verfahrensschritt betrifft eine Schneidstation zum Einschneiden der Schlitze 9a und 9b zur Erzeugung eines fertigen Rohlings 14. Die Schneidstation kann eine Schneidwalze umfassen, die eine Vielzahl von Schneidkanten aufweist, die jeweils einzelne Schlitze 9a und 9b herstellen, wobei eine Schneidkante jeweils die beiden Lagen 10a und 10b aus Filterpapier durchgreift. Die Schneidkanten an der Schneidwalze sind im Querschnitt vorzugsweise keilförmig ausgebildet, so dass während des Schneidvorganges Schlitze 9a und 9b mit unterschiedlicher Öffnungsweite hergestellt werden.

Im letzten Schritt erfolgt eine Vereinzelung, so dass ein Filterpapiereinsatz 1 bereitgestellt wird, wie er in den Figuren 1a und 1b gezeigt ist.

Die Reihenfolge der Verfahrensschritte nach dem aufeinander Falten der beiden Lagen 10a und 10b des bahnförmigen Filterpapiers kann dabei beliebig sein. Beispielsweise kann zuerst ein Prägen erfolgen, um dann gleichzeitig die Schlitze 9a und 9b einzuschneiden als auch die äußere Kontur des Filterpapiereinsatzes 1 zu schneiden. Dies kann optional an einem einzigen Schneidwerkzeug erfolgen, beispielsweise einer Schneidwalze mit entsprechenden Schneidkanten.

### Bezugszeichenliste

- 1: Filterpapiereinsatz
- 2a: Lage
- 2b: Lage
- 3: Boden
- 4: Seite
- 5: Seite
- 6: Öffnungsseite
- 7: Prägenaht
- 8: Prägenaht
- 9a: Schlitz
- 9b: Schlitz
- 10: Bahn
- 10a: Lage
- 10b: Lage
- 11: Faltkante
- 12: Rohling
- 13: Rohling
- 14: Rohling

- B: Öffnungsweite
- b: Öffnungsweite

## Patentansprüche

1. Filterpapiereinsatz (1) zur Herstellung von Brühgetränken, mit zwei Lagen (2a, 2b) aus Filterpapier, die an einem Boden (3) und an zwei gegenüberliegenden Seiten (4, 5) zur Ausbildung eines befüllbaren Innenraumes miteinander verbunden sind, wobei die Lagen (2a, 2b) aus Filterpapier an einer zu dem Boden (3) gegenüberliegenden Öffnungsseite (6) von einer aufeinander liegenden Position in eine beabstandete Befüllposition bewegbar sind, und in den beiden Lagen (2a, 2b) aus Filterpapier eine Vielzahl von Schlitzen (9a, 9b) vorgesehen sind, **dadurch gekennzeichnet, dass** die kleinste Öffnungsweite (B, b) der Schlitze (9a, 9b) senkrecht zu ihrer Längsrichtung in den beiden Lagen (2a, 2b) aus Filterpapier unterschiedlich ist.

2. Filterpapiereinsatz nach Anspruch 1, **dadurch gekennzeichnet, dass** die kleinste Öffnungsweite (B) in der ersten Lage (2a) des Filterpapiers mindestens 10 % breiter ist als die kleinste Öffnungsweite (b) in der zweiten Lage (2b) aus Filterpapier.

3. Filterpapiereinsatz nach Anspruch 1 oder 2, **dadurch gekennzeichnet, dass** die Schlitze (9a, 9b) senkrecht zu ihrer Längsrichtung im Querschnitt in beiden Lagen (2a, 2b) keilförmig ausgebildet sind.

4. Filterpapiereinsatz nach Anspruch 3, **dadurch gekennzeichnet, dass** zumindest in einer Lage (2a, 2b) wenigstens ein Teil der keilförmigen Schlitze (9a, 9b) in Fließrichtung aufspreizend ausgebildet ist.

5. Filterpapiereinsatz nach einem der vorhergehenden Ansprüche, **dadurch gekennzeichnet, dass** die Schlitze (9a, 9b) jeweils die gleiche Länge besitzen.

6. Filterpapiereinsatz nach einem der vorhergehenden Ansprüche, **dadurch gekennzeichnet, dass** die Länge der Schlitze (9a, 9b) zwischen 1 mm und 5 mm, insbesondere zwischen 2 mm bis 4 mm beträgt.

7. Filterpapiereinsatz nach einem der vorhergehenden Ansprüche, **dadurch gekennzeichnet, dass** die Schlitze (9a, 9b) in den beiden Lagen (2a, 2b) durch das gleiche Schneidwerkzeug hergestellt sind, welches auch zum Ausschneiden des Filterpapiereinsatzes (1) verwendet wird.

8. Filterpapiereinsatz nach einem der vorhergehenden Ansprüche, **dadurch gekennzeichnet, dass** die Schlitze (9a, 9b) in Längsrichtung gerade ausgebildet sind.

9. Verfahren zur Herstellung eines Filterpapiereinsatzes (1) zur Herstellung von Brühgetränken, mit den folgenden Schritten:
- Bereitstellen einer Bahn (10) aus Filterpapier;
- Falten der Bahn (10) aus Filterpapier, so dass zwei bahnförmige Lagen (10a, 10b) aus Filterpapier aufeinander liegend angeordnet sind;
- Schneiden von Schlitzen (9a, 9b) in die aufeinander liegenden Lagen (10a, 10b) aus Filterpapier, wobei die kleinste Öffnungsweite (B, b) der Schlitze (9a, 9b) senkrecht zu ihrer Längsrichtung in den beiden Lagen (2a, 2b) aus Filterpapier unterschiedlich ist, und
- Prägen und Ausschneiden eines Filterpapiereinsatzes (1) aus den aufeinander liegenden Lagen (10a, 10b) aus Filterpapier.

10. Verfahren nach Anspruch 9, **dadurch gekennzeichnet, dass** das Schneiden von Schlitzen (9a, 9b) und das Ausschneiden des Filterpapiereinsatzes (1) gleichzeitig erfolgt.

11. Verfahren nach Anspruch 9 oder 10, **dadurch gekennzeichnet, dass** für das Schneiden der Schlitze (9a, 9b) und das Ausschneiden eine Schneidwalze mit mehreren Schneidkanten eingesetzt wird.

12. Verfahren nach einem der Ansprüche 8 - 11, **dadurch gekennzeichnet, dass** eine Schneidkante zum Schneiden der Schlitze (9a, 9b) im Querschnitt keilförmig ausgebildet ist.
